# EUROPÄISCHE PATENTSCHRIFT

(11) **EP 1 720 637 B1**
(45) Veröffentlichungstag und Bekanntmachung des Hinweises auf die Patenterteilung: **24.06.2009**
(21) Anmeldenummer: 05701179.3
(22) Anmeldetag: 26.01.2005
(51) Int. Cl.: B01D 63/02, B29C 70/84, B01D 65/00

(54) **VERFAHREN ZUR HERSTELLUNG EINER MEMBRANFILTEREINHEIT**
METHOD FOR THE PRODUCTION OF A MEMBRANE FILTER UNIT
PROCEDE DE FABRICATION D'UNE UNITE DE FILTRE A MEMBRANE

(30) Priorität: 27.01.2004 DE 102004004212
(43) Veröffentlichungstag der Anmeldung: 15.11.2006
(73) Patentinhaber: Koch Membrane Systems GmbH, 52072 Aachen (DE)
(72) Erfinder: SCHÄFER, Stefan, 52074 Aachen (DE); VOSSENKAUL, Klaus, 52074 Aachen (DE); KULLMANN, Christoph, 52249 Eschweiler (DE); KRUSE, Andreas, 52134 Herzogenrath (DE)
(74) Vertreter: Albrecht, Rainer Harald
(86) Internationale Anmeldenummer: PCT/EP2005/000720
(87) Internationale Veröffentlichungsnummer: WO 2005/070523

(56) Entgegenhaltungen:
- EP-A- 0 170 210
- EP-A- 0 338 774
- EP-A- 1 374 979
- WO-A-00/44483
- WO-A-01/85315
- DE-C1- 3 931 981
- US-B1- 6 180 038
- PATENT ABSTRACTS OF JAPAN Bd. 017, Nr. 685 (C-1142), 15. Dezember 1993 (1993-12-15) -& JP 05 228345 A (MATERIAL ENG TECH LAB INC), 7. September 1993 (1993-09-07)

## Beschreibung

Die Erfindung betrifft eine Methode zur Herstellung einer Membranfiltereinheit für flüssige oder gasförmige Medien mit einem Bündel oder einer beliebig angeordneten Mehrzahl aus an mindestens einer Stirnseite offenen Kapillarmembranen, die in einem zu dem offenen Membranende endnahen Bereich in eine zu einem festen Kopfstück ausgehärtete Dichtungsschicht eingegossen sind, wobei die offenen Membranenden an der Außenseite der Dichtungsschicht vorstehen.

Die zur Membranfiltration eingesetzten Kapillarmembranen können je nach Ausführung und Anwendungsfall Außendurchmesser zwischen 200 µm und etwa 5 mm aufweisen. Um eine ordnungsgemäße Funktion bei der Membranfiltration sicherzustellen, müssen die Kapillarmembranen fehlstellenfrei in das Kopfstück eingegossen sein. Ferner muss sichergestellt werden, dass die Kapillarmembranen bei der Herstellung des als Gießteil gefertigten Kopfstückes endseitig nicht verklebt, verstopft oder mechanisch beschädigt werden. Mechanische Bearbeitungen durch Schneiden ist zu vermeiden, da viele Membranmaterialien bei einer mechanischen Bearbeitung ausfasern.

Bei einem aus US 5 639 373 bekannten Verfahren zur Herstellung einer Membranfiltereinheit mit den eingangs beschriebenen Merkmalen wird das Ende des Membranbündels in eine flüssige Schicht eingetaucht, die zu einem festen Träger erstarrt. Anschließend wird auf diese Trägerschicht die aus Kunststoffmasse bestehende Dichtungsschicht aufgebracht und die Kapillarmembranen in der Kunststoffmasse eingegossen. Nach Aushärten der Kunststoffmasse wird die Trägerschicht wieder verflüssigt und entfernt, wobei die Enden der Kapillarmembranen freigelegt werden. Fertigungstechnische Probleme ergeben sich bei einer engen Packung der Kapillarmembranen infolge von Kapillarkräften, die zwischen den Kapillarmembranen wirken. Wenn das Membranbündel in die Flüssigkeit eingetaucht wird, steigt die Flüssigkeit an der Außenseite der Kapillarmembranen nach Maßgabe der wirkenden Kapillarkräfte nach oben. Bei der nachfolgenden Fertigung des Kopfstückes wird das Eindringen der Kunststoffmasse von außen in das Innere des Membranfaserbündels behindert und ist ein sicheres Umschließen der einzelnen Membranfasern mit Kunststoffmasse nicht mehr gewährleistet.

Bei einem aus US 6 294 039 bekannten Verfahren werden die in das Kopfstück einzugießenden Membranen mit ihrem freien Ende in eine Schicht aus feinteiligen Feststoffen eingesetzt, auf die zu einem Kopfstück aushärtende Kunststoffmasse aufgebracht wird. Nachdem das Kopfstück ausgehärtet ist, wird die Feststoffschicht wieder entfernt, wobei die Enden der Kapillarmembranen freigelegt werden. Das Verfahren ist fertigungstechnisch insofern nachteilig, als nur eine verhältnismäßig geringe Zahl von Kapillarmembranen gleichzeitig in die Feststoffschicht eingetaucht werden kann, da das Material nur eine geringe Verdrängung erlaubt.

Aus WO 01/85315 ist ein Verfahren unter Verwendung einer flüchtigen Flüssigkeit, einer Suspension oder eines Gels bekannt, in die bzw. in das die Enden der Kapillarmembranen eingetaucht werden. Die Kapillarmembranen, fixiert mit einem Abstandshalter, werden daraufhin in eine Dichtungsmasse eingegossen. Die Substanz, in die die Enden der Kapillarmembranen eingetaucht sind, weist eine relativ hohe Viskosität auf, um ein signifikantes Kriechen der Subtanz infolge von Kapillarkräften zu vermeiden. Auch bei diesem Verfahren kann jedoch nicht verhindert werden, dass die Substanz an der Außenseite der Kapillarmembranen etwas nach oben steigt. Deshalb ergeben sich auch hier fertigungstechnische Probleme.

Allen genannten Herstellungsverfahren ist gemeinsam, dass in einem ersten Verfahrensschritt die offenen Enden der Kapillarmembranen zunächst in eine Schicht eingetaucht werden, die während des Eingießens der Kapillarmembranen einen Kontakt der Enden mit dem Gießmaterial verhindert. Nachdem das Kopfstück ausgehärtet ist, müssen die Enden der Kapillarmembranen durch das Entfernen dieser Schicht wieder freigelegt werden. Die bekannten Herstellungsverfahren sind daher relativ aufwendig.

In EP 0 771 233 B1 wird ein Verfahren zur Herstellung von Kopfstücken einer Membranfiltereinheit beschrieben, bei dem Kapillarmembranen durch einen als Lochplatte aus gebildeten Boden einer Gießform geführt werden. In die Gießform wird ein viskoses Gießmaterial gegeben, welches den Freiraum zwischen den Kapillarmembranen ausfüllt und zu einem festen Kopfstück aushärtet. Das Kopfstück wird mit den Kapillarmembranen anschließend aus der Gießform herausgezogen. In einem letzten Verfahrensschritt wird das Kopfstück durchgeschnitten, um die Kapillarmembranen zu öffnen. Nach dem Aufschneiden des Kopfstückes schließen die offenen Enden der Kapillarmembranen plan mit der Außenfläche der ausgehärteten Dichtungsschicht ab. Für Kapillarmembranen, die bei einer mechanischen Bearbeitung ausfasern, ist das Verfahren ungeeignet.

Ausgehend von der beschriebenen Problematik liegt der Erfindung die Aufgabe zugrunde, ein Verfahren zur Herstellung einer Membranfiltereinheit mit den eingangs beschriebenen Merkmalen anzugeben, deren Kopfstück ohne mechanische Bearbeitung auf einfache Weise fehlerfrei herstellbar ist.

Erfindungsgemäß wird die Aufgabe durch das Verfahren gemäß Anspruch 1 gelöst, wobei die Dichtungsschicht aus einem Abstandshalter angeordnet ist, der eine von den Kapillarmembranen durchdrungene und für das zur Dichtungsschicht aushärtende Gießmaterial undurchlässige Schicht aufweist. Bei der Herstellung der Membranfiltereinheit wird auf die den offenen Enden der Kapillarmembranen zugewandten Seite des Abstandshalters eine die Gesamtheit oder einzelne Gruppen der zu verarbeitenden Kapillarmembranen umschließende Wandung aufgesetzt, die gemeinsam mit dem einen Boden bildenden Abstandshalter die Gießform für die Dichtungsschicht bildet. Im Rahmen der Erfindung liegt es auch, dass an den Abstandshalter ein Kragen angeformt ist, der einen Aufnahmeraum für das Gießmaterial bildet und als Gießform nutzbar ist. Insbesondere kann die Wandung auch integraler Bestandteil eines Kopfstückes sein, das einen Permeatsammelraum aufweist, welches in Fluidkommunikation mit den aus dem Gießmaterial herausragenden offenen Membranenden ist. Durch das Befüllen der Gießform erfolgt die Herstellung des Kopfstückes, wobei die für das Gießmaterial undurchlässige Schicht des Abstandshalters ein Ausfließen des Gießmaterials aus der Gießform verhindert. Die Höhe der Gießschicht wird hierbei so bemessen, dass die offenen Enden der Kapillarmembranen unverschlossen bleiben. Auf diese Weise lassen sich fehlerfreie Kopfstücke problemlos herstellen. Bei der erfindungsgemäßen Membranfiltereinheit können strukturierte Anordnungen der Kapillarmembranen, wie z.B. sternförmige, ringförmige oder rechteckige Geometrien, problemlos realisiert werden. Solche Anordnungen erlauben beispielsweise die Reinigung der Kapillarmembranen während des Betriebs durch zentrale Luftbegasung. Durch den Abstandshalter ist es möglich, einen definierten Abstand zwischen den einzelnen Kapillarmembranen sicherzustellen. Hierdurch ist gewährleistet, dass jede einzelne Kapillarmembran vom Gießmaterial fehlerfrei umschlossen wird. Der Abstandshalter kann ferner mit Zuleitungen, z.B. für eine Luftbegasung, versehen sein.

Der Abstandshalter kann aus einer Lochplatte bestehen, deren Öffnungen die Kapillarmembranen im Wesentlichen ohne Spalt umschließen. In diesem Fall werden die Kapillarmembranen durch die Öffnungen der Lochplatte hindurchgeschoben. Anschließend wird das Gießmaterial auf die Oberseite des Abstandshalters aufgebracht. Die Lochplatte kann beispielsweise aus Metall oder Kunststoff oder einem elastomeren Material bestehen.

Im Rahmen der Erfindung liegt es auch, dass der Abstandshalter aus einem flexiblen Kunststoffband besteht, welches Öffnungen oder seitliche Schlitze zur Aufnahme der Kapillarmembranen aufweist. Das Kunststoffband kann spiralförmig aufgewickelt werden, oder es können Abschnitte des Kunststoffbandes zu einem mehrlagigen Paket zusammengefasst werden.

Eine weitere Ausgestaltung der Erfindung sieht vor, dass der Abstandshalter eine Funktionsschicht aus feinteiligem Feststoff und/oder einer weichen Substanz und/ oder einer Folie aufweist, die von den Enden der Kapillarmembranen vor dem Gießprozess durchstoßen wird. Beispielsweise bei größeren Kapillardurchmessern kann es hierbei zweckmäßig sein, die offenen Membranenden zunächst mit einer Substanz zu verschließen, die nach dem Durchstoßen leicht wieder entfernt werden kann. Die Funktionsschicht kann in einem mit Öffnungen versehen Träger angeordnet sein.

Gegenstand der Erfindung ist das Verfahren zur Herstellung der beschriebenen Membranfiltereinheit. Bei diesem Verfahren werden Kapillarmembranen mit einem überstehenden Ende in einen Abstandshalter eingesetzt, der eine von den Kapillarmembranen durchdrungene und für Gießmaterial undurchlässige Schicht aufweist. Auf den Abstandshalter wird dann eine Dichtungsschicht aus viskosem Gießmaterial aufgebracht, welches den Freiraum zwischen den an der Oberseite des Abstandhalters vorstehenden Kapillarmembranen bis zu einem Niveau unterhalb der Membranenden ausfüllt und zu einem festen Kopfstück aushärtet. Bevorzugte Ausgestaltungen diese Verfahrens sind den Ansprüchen 8 bis 16 beschrieben und werden im Folgenden anhand von Ausführungsbeispielen erläutert. Es zeigen schematisch,
- Fig. 1: eine Membranfiltereinheit während des erfindungsgemäßen Herstellungsprozesses,
- Fig. 2 bis 5: weitere Ausgestaltungen der erfindungsgemäßen Lehre,
- Fig. 6: den Schnitt A-A aus Fig. 3.

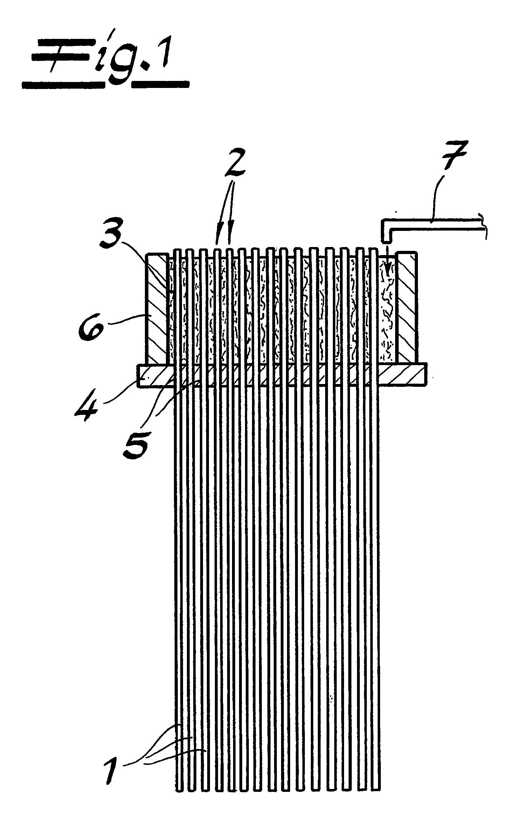

Die Figuren zeigen eine Membranfiltereinheit für flüssige oder gasförmige Medien mit einem Bündel oder einer beliebig angeordneten Mehrzahl aus an mindestens einer Stirnseite offenen Kapillarmembranen 1, die in einem zu dem offenen Membranende 2 endnahen Bereich in eine zu einem festen Kopfstück ausgehärtete Dichtungsschicht 3 eingegossen sind. Den Darstellungen entnimmt man, dass die offenen Membranenden 2 an der Oberseite der Dichtungsschicht 3, also an der Außenseite des Kopfstückes, vorstehen. Die Dichtungsschicht 3 wird an ihrer von den offenen Enden 2 der Kapillarmembranen 1 abgewandten Seite auf die nach oben zeigende Seite eines Abstandshalters 4 aufgetragen. Der Abstandshalter 4 weist eine von den Kapillarmembranen 1 durchdrungene und für das zur Dichtungsschicht 3 ausgehärtete Gießmaterial undurchlässige oder zumindest weitgehend undurchlässige Schicht auf. Im Ausführungsbeispiel der Fig. 1 besteht der Abstandshalter 4 aus einer Lochplatte, deren Öffnungen 5 die Kapillarmembranen im Wesentlichen ohne Spalt umschließen. Je nach Ausführung können die Öffnungen oder ein Teil der Öffnungen der Lochplatte aufgeweitet oder gedehnt werden. Die Beschickung der Lochplatte mit den Kapillarmembranen kann z. B. durch Einstecken oder Einziehen erfolgen.

Bei der Herstellung der Membranfiltereinheit werden die Kapillarmembranen 1 mit einem überstehenden Ende in die Lochplatte 4 eingesetzt, indem die Kapillarmembranen 1 die Lochplatte 4 durchdringen. Danach wird oberseitig auf die Lochplatte 4 eine Wandung 6 aufgesetzt, die gemeinsam mit der einen Boden bildenden Lochplatte 4 eine Gießform für die Dichtungsschicht 3 bildet. Die aus viskosem Gießmaterial bestehende Dichtungsschicht 3 wird anschließend auf die Lochplatte 4 aufgebracht. Das Gießmaterial füllt den Freiraum zwischen den an der Oberseite der Lochplatte 4 vorstehenden Enden der Kapillarmembranen 1 aus und härtet zu einem festen Kopfstück aus. Aus den Figuren ist ferner ersichtlich, dass jeder Öffnung 5 der Lochplatte 4 jeweils eine Kapillarmembran 1 zugeordnet wird. Dies gewährleistet ein fehlerfreies Umschließen jeder einzelnen Kapillarmembran 1 durch das Gießmaterial. Ferner können hierdurch strukturierte Anordnungen der Kapillarmembranen 1 problemlos realisiert werden. Die oberhalb der Lochplatte 4 vorstehenden Enden 2 der Kapillarmembranen 1 bleiben beim Aufbringen des Gießmaterials unverschlossen. Das Gießmaterial wird im Ausführungsbeispiel der Fig. 1 neben den Kapillarmembranen 1 an der Oberseite des Abstandshalters 4 durch einen Zuführkanal 7 zugeführt. Im Rahmen der Erfindung liegt es, dass die Dichtungsschicht 3 in einer oder mehreren Lagen auf die Lochplatte 4 aufgebracht wird. Bei einem mehrlagigen Auftragen der Dichtungsschicht ist die jeweils untere Lage zumindest teilweise ausgehärtet, bevor die nächste Lage aufgebracht wird. Der mehrlagige Aufbau kann sich vorteilhaft auf die physikalischen Eigenschaften der Dichtungsschicht 3 auswirken. Als Gießmaterial können thermoplastische oder duoplastische Kunststoffe, beispielsweise Polyurethan- oder Epoxidharze, verwendet werden. Nachdem das Gießmaterial ausgehärtet ist, kann die Wandung 6 bei Bedarf entfernt werden.

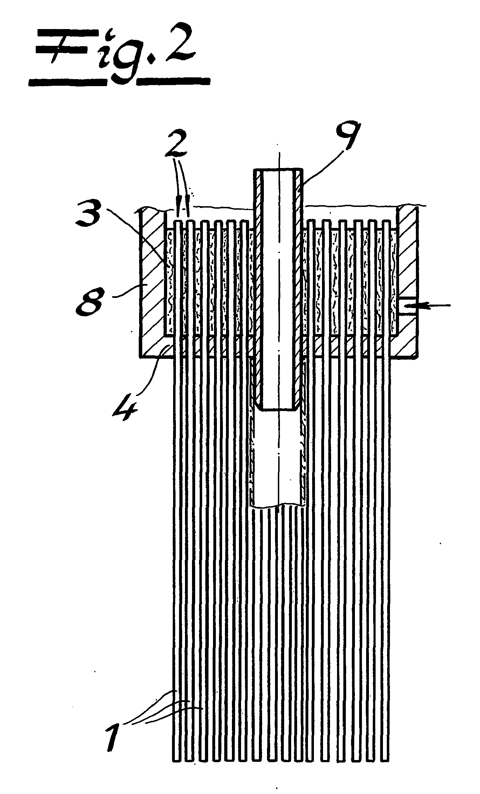

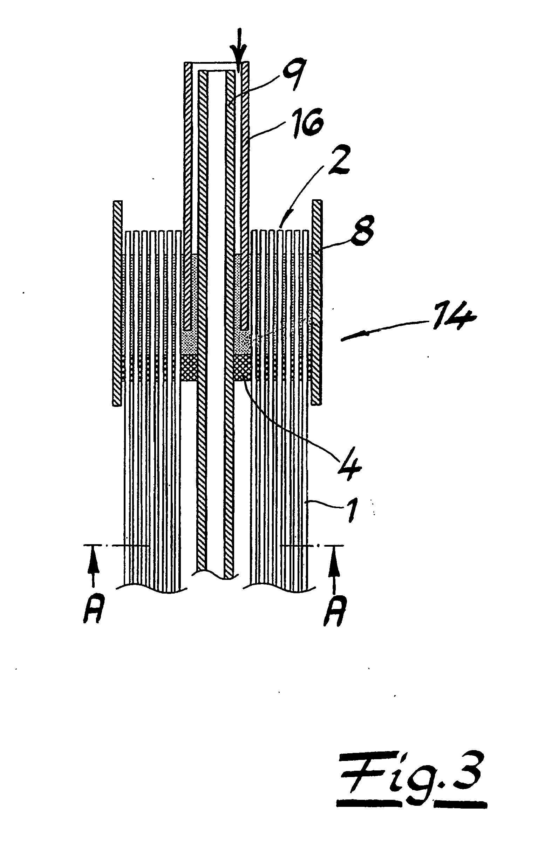

Im Ausführungsbeispiel der Fig. 2 ist an den Abstandshalter 4 ein Kragen 8 angeformt, der einen Aufnahmeraum für das Gießmaterial bildet. Der mit einem Kragen 8 ausgebildete Abstandshalter 4 bildet eine verlorene Gießform 14. Diese weist im Ausführungsbeispiel eine oder mehrere Öffnungen 15 auf, durch die das Gießmaterial zugeführt wird. Im Ausführungsbeispiel ist das die Gießform 14 bildende Bauteil zusätzlich mit einem Rohrstutzen 9 versehen, der zur Begasung der Membranfiltereinheit genutzt werden kann. Eine weitere bevorzugte Möglichkeit zur Zuführung des Gießmaterials ist in Fig. 3 dargestellt. Das Gießmaterial wird hierbei durch ein Rohr 16 zugeführt, welches den Rohrstutzen 9 des Bauteils 14 mit einem Ringspalt umgibt.

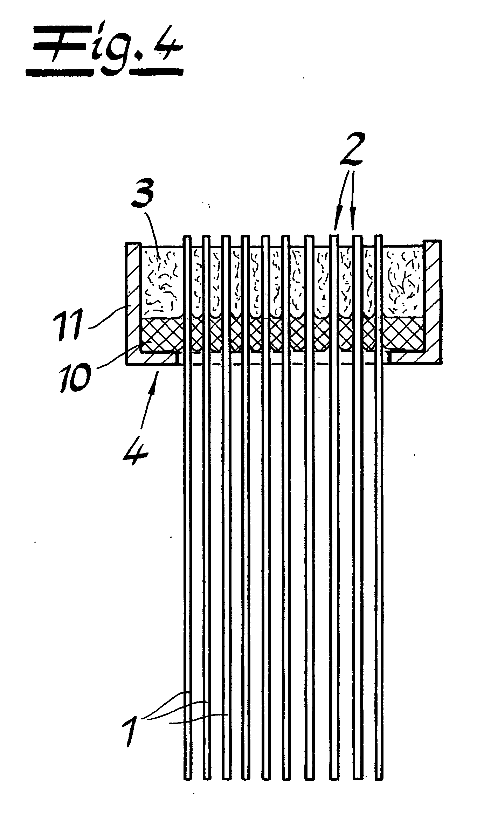

Im Ausführungsbeispiel der Fig. 4 weist der Abstandshalter 4 eine Funktionsschicht 10 aus einer weichen Substanz auf, die von den Enden der Kapillarmembranen 1 durchstoßen worden ist. Die Funktionsschicht 10 ist in einem mit Öffnungen versehenen Träger angeordnet. Anstelle einer weichen Substanz kann auch ein feinteiliger Feststoff und/oder eine Folie verwendet werden.

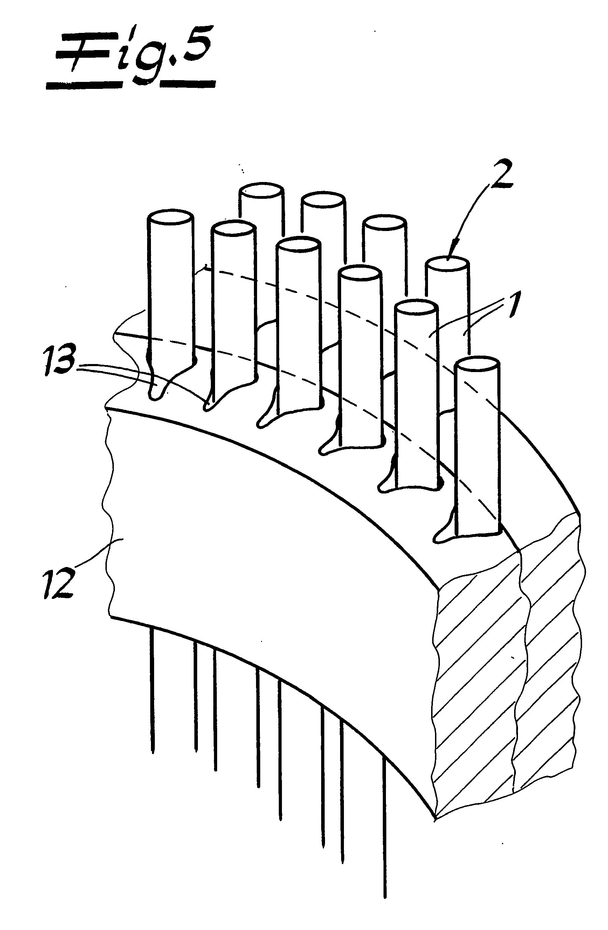

Im Ausführungsbeispiel der Fig. 5 besteht der Abstandshalter 4 aus einem flexiblen Kunststoffband 12, welches Öffnungen oder seitliche Schlitze 13 zur Aufnahme der Kapillarmembranen 1 aufweist. Die Kapillarmembranen 1 werden in die seitlichen Schlitze 13 bzw. Öffnungen des Kunststoffbandes 12 eingesetzt, das zu einer Spirale aufgewickelt wird. Anstelle der in Fig. 5 dargestellten spiralförmigen Anordnung können Abschnitte des Kunststoffbandes 12 auch zu einem mehrlagigen Paket zusammengefasst werden.

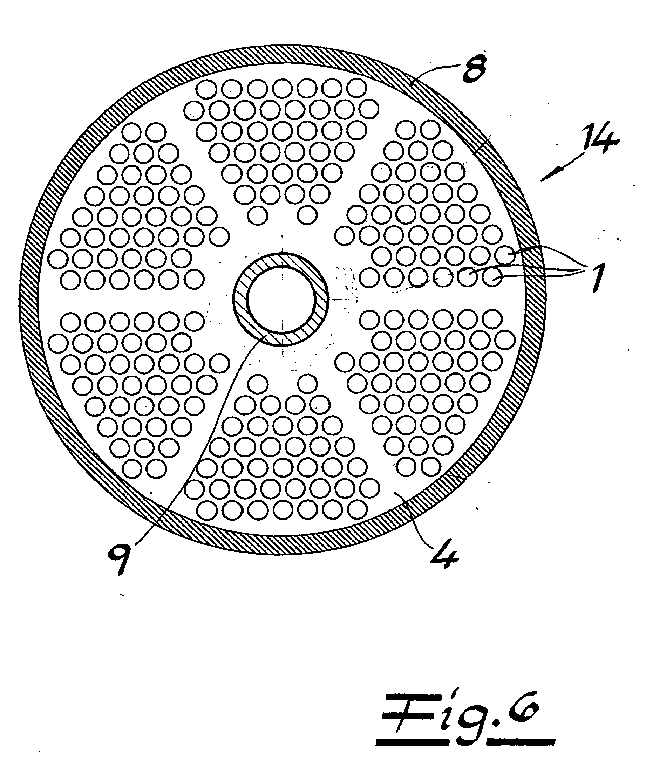

Bei der erfindungsgemäßen Membranfiltereinheit können strukturierte Anordnungen der Kapillarmembranen, z. B. sternförmige, ringförmige oder rechteckige Geometrien problemlos realisiert werden. Bei der in Fig. 6 dargestellten Anordnung sind die Kapillarmembranen 1 in Kreissegmenten gebündelt. Zwischen den Kreissegmenten verbleibt ein Freiraum, der eine rohwasserseitige Strömung bis ins Innere des Membranfaserbündels ermöglicht.

## Patentansprüche

1. Verfahren zur Herstellung einer Membranfiltereinheit für flüssige oder gasförmige Medien mit einem Bündel oder einer beliebig angeordneten Mehrzahl aus an mindestens einer Stirnseite offenen Kapillarmembranen (1) die in einem zu dem offenen Membranende (2) endnahen Bereich in einer zu einem festen Kopfstück ausgehärteten Dichtungsschicht (3) eingegossen sind und deren offene Membranenden (2) an der Außenseite der Dichtungsschicht (3) vorstehen,
wobei die Kapillarmembranen (1) mit einem überstehenden Ende in einen Abstandshalter (4) eingesetzt werden, der eine von den Kapillarmembranen (1) durchdrungene und für Gießmaterial undurchlässige Schicht aufweist,
wobei der Abstandshalter (4) so positioniert wird, dass die überstehenden Enden der Kapillarmembranen (1) nach oben vorstehen und
wobei auf den Abstandshalter (4) eine Dichtungsschicht (3) aus viskosem Gießmaterial aufgebracht wird, welches den Freiraum zwischen den an der Oberseite des Abstandshalters (4) vorstehenden Kapillarmembranen (1) bis zu einem Niveau unterhalb der Membranenden ausfüllt und zu einem festen Kopfstück aushärtet.

2. Verfahren nach Anspruch 1, **dadurch gekennzeichnet, dass** als Abstandshalter (4) eine Platte mit Öffnungen (5) verwendet wird, in welche die Kapillarmembranen (1) eingerührt werden.

3. Verfahren nach Anspruch 2, **dadurch gekennzeichnet, dass** jeder Öffnung (5) jeweils eine Kapillarmembran (1) zugeordnet wird.

4. Verfahren nach Anspruch 1, **dadurch gekennzeichnet, dass** der Abstandshalter (4) eine für das Gießmaterial undurchlässige Schicht (10) aufweist, die beim Einsetzen der Kapillarmembranen (1) durchstoßen wird.

5. Verfahren nach Anspruch 4, **dadurch gekennzeichnet, dass** die beim Einsetzen der Kapillarmembranen (1) durchstoßene Schicht (10) aus feinteiligem Feststoff, einer weichen Substanz oder einer Folie besteht.

6. Verfahren nach Anspruch 1, **dadurch gekennzeichnet, dass** die Kapillarmembranen (1) in Öffnungen oder seitliche Schlitze (13) eines Kunststoffbandes (12) eingesetzt werden und dass das Kunststoffband (12) zu einer Spirale aufgewickelt oder Abschnitte des Kunststoffbandes (12) zu einem Paket zusammengefasst werden.

7. Verfahren nach einem der Ansprüche 1 bis 5, **dadurch gekennzeichnet, dass** die oberhalb des Abstandshalters (4) vorstehenden Enden der Kapillarmembranen (1) beim Aufbringen des Gießmaterials unverschlossen bleiben.

8. Verfahren nach einem der Ansprüche 1 bis 7, **dadurch gekennzeichnet, dass** das Gießmaterial neben den Kapillarmembranen (1) an der Oberseite des Abstandshalters (4) zugeführt werden.

9. Verfahren nach einem der Ansprüche 1 bis 8, **dadurch gekennzeichnet, dass** das Gießmaterial durch eine oder mehrere Öffnungen (15) eines das Gießmaterial aufnehmenden Bauteils (14) zugeführt wird.

10. Verfahren nach einem der Ansprüche 1 bis 9, **dadurch gekennzeichnet, dass** die Dichtungsschicht in mehreren Lagen auf dem Abstandshalter (4) aufgebracht wird, wobei die jeweils untere Lage zumindest teilweise ausgehärtet ist, bevor die nächste Lage aufgebracht wird.

## Claims

1. The method for manufacturing a membrane filter unit for fluid or gaseous media with a bundle or an arbitrarily arranged plurality of capillary membranes (1) open on at least one front end which in a region near the end of the open membrane end (2) are poured in a sealing layer (3) hardened to a solid head piece and whose open membrane ends (2) project at the outer side of said sealing layer (3),
wherein said capillary membranes (1) are inserted with an overlapping end in a spacer (4) having a layer which is penetrated by said capillary membranes (1) and impermeable for casting material,
wherein said spacer (4) is positioned such that said projecting ends of said capillary membrane (1) project upwards and
wherein on said spacer (4) a sealing layer (3) out of viscous casting material is applied which fills the free space between said capillary membranes (1) projecting at the upper side of said spacer (4) up to a level underneath said membrane ends and hardens to a solid head piece.

2. The method according to claim 1, **characterized in that** as spacer (4) a plate with apertures (5) is used in which said capillary membranes (1) are introduced.

3. The method according to claim 2, **characterized in that** each aperture (5) is associated with respectively one capillary membrane (1).

4. The method according to claim 1, **characterised in that** said spacer (4) has an impermeable layer (10) for the casting material which is penetrated by the insertion of said capillary membranes (1).

5. The method according to claim 4, **characterized in that** said layer (10) penetrated by the insertion of said capillary membranes (1) is out of a fine particle solid or a soft substance or a film.

6. The method according to claim 1, **characterized in that** said capillary membranes (1) are inserted in apertures or lateral slits (13) of a plastic band (12) and that said plastic band (12) is wound to a coil or sections of said plastic band (12) are combined to a packet.

7. The method according to one of the claims 1 to 5, **characterized in that** said ends of said capillary membrane (1) projecting above said spacer (4) remain unsealed with the application of said casting material.

8. The method according to one of the claims 1 to 7, **characterized in that** said casting material in addition to said capillary membranes (1) are introduced at said upper side of said spacer (4).

9. The method according to one of the claims 1 to 8, **characterized in that** said casting material is fed through one or a plurality of apertures (15) of a component (14) accommodating said casting material.

10. The method according to one of the claims 1 to 9, **characterized in that** said sealing layer is applied in a plurality of layers on said spacer (4), wherein the respective lower layer is at least partially hardened before the next layer is applied.

## Revendications

1. Procédé pour la fabrication d'une unité filtrante à diaphragme pour agents liquides ou gazeux avec un faisceau ou une pluralité disposée de façon quelconque de diaphragmes capillaires (1) ouverts sur au moins un côté avant, qui sont coulés dans une zone proche de l'extrémité de diaphragme (2) ouverte dans une couche d'étanchéité durcie en une partie de tête solide et dont des extrémités de diaphragme (2) ouvertes dépassent sur le côté extérieur de la couche d'étanchéité (3),
les diaphragmes capillaires (1) étant insérés avec une extrémité saillante dans un écarteur (4), qui présente une couche traversée par les diaphragmes capillaires (1) et imperméables pour du matériau de coulée,
l'écarteur (4) étant positionné de telle sorte que les extrémités débordantes des diaphragmes capillaires (1) dépassent vers le haut et
une couche d'étanchéité (3) à base de matériau de coulée visqueux étant appliquée sur l'écarteur (4), lequel matériau remplit l'espace libre entre les diaphragmes capillaires (1) dépassant sur le côté supérieur de l'écarteur (4) jusqu'à un niveau situé au-dessous des extrémités des diaphragmes et durcit en une pièce de tête rigide.

2. Procédé selon la revendication 1, **caractérisé en ce qu'**une plaque avec des ouvertures (5), dans lesquelles les diaphragmes capillaires (1) sont introduits, est utilisée comme écarteur (4).

3. Procédé selon la revendication 2, **caractérisé en ce que** à chaque fois un diaphragme capillaire (1) est attribué à chaque ouverture (5).

4. Procédé selon la revendication 1, **caractérisé en ce que** l'écarteur (4) présente une couche (10) imperméable pour le matériau de coulée, qui est traversée lors de l'insertion des diaphragmes capillaires (1)

5. Procédé selon la revendication 4, **caractérisé en ce que** la couche (10) traversée lors de l'insertion des diaphragmes capillaires (1) est à base de matière solide à fines particules, d'une substance souple ou d'une feuille

6. Procédé selon la revendication 1, **caractérisé en ce que** les diaphragmes capillaires (1) sont insérées dans des ouvertures ou des fentes (13) latérales, d'une bande plastique (12) et **en ce que** la bande plastique (12) est enroulée en une spirale ou des parties de la bande plastique (12) sont regroupées en un paquet.

7. Procédé selon l'une quelconque des revendications 1 à 5, **caractérisé en ce que** les extrémités, dépassant au-dessus de l'écarteur (4) des diaphragmes capillaires (1) restent non fermées lors de l'application du matériau de coulée.

8. Procédé selon l'une quelconque des revendications 1 à 7, **caractérisé en ce que** le matériau de coulée est amené parallèlement aux diaphragmes capillaires (1) sur le côté supérieur de l'écarteur (4).

9. Procédé selon l'une quelconque des revendications 1 à 8, **caractérisé en ce que** le matériau de coulée est amené par une ou plusieurs ouvertures (15) d'un composant (14) recevant le matériau de coulée.

10. Procédé selon l'une quelconque des revendications 1 à 9, **caractérisé en ce que** la couche d'étanchéité est appliquée en plusieurs couches sur l'écarteur (4), la couche respectivement inférieure étant au moins en partie durcie avant que la couche suivante soit appliquée.
